# EUROPÄISCHE PATENTSCHRIFT

(11) **EP 1 467 623 B1**
(45) Veröffentlichungstag und Bekanntmachung des Hinweises auf die Patenterteilung: **01.10.2008**
(21) Anmeldenummer: 03729423.8
(22) Anmeldetag: 07.01.2003
(51) Int. Cl.: A01N 47/38

(54) **VERWENDUNG VON ALKOHOLETHOXYLATEN ALS PENETRATIONSFÖRDERER**
USE OF ALCOHOL ETHOXYLATES AS PENETRATION ENHANCERS
UTILISATION D'ETHOXYLATES D'ALCOOL EN TANT QU'AGENTS FAVORISANTS LA PENETRATION

(30) Priorität: 16.01.2002 DE 10201391
(43) Veröffentlichungstag der Anmeldung: 20.10.2004
(73) Patentinhaber: Bayer CropScience AG, 40789 Monheim (DE)
(72) Erfinder: BAUR, Peter, 65817 Eppstein (DE); FEUCHT, Dieter, 65760 Eschborn (DE); KREMER, Mathias, 51399 Burscheid (DE); TOP, Frederic, 51375 Leverkusen (DE); SCHWIEDOP, Ulrich, 40789 Monheim (DE); WELLMANN, Arndt, 51515 Kürten (DE)
(74) Vertreter: Schwenk, Norbert
(86) Internationale Anmeldenummer: PCT/EP2003/000053
(87) Internationale Veröffentlichungsnummer: WO 2003/059066

(56) Entgegenhaltungen:
- EP-A- 0 473 003
- EP-A- 0 579 052
- WO-A-96/31121
- D. STOCK ET AL: "Surfactant enhanced foliar uptake of some organic compounds: interactions with two model polyoxyethylene aliphatic alcohols.." PESTICIDE SCIENCE, Bd. 34, 1992, Seiten 233-242, XP002240422 BARKING GB

## Beschreibung

Die vorliegende Erfindung betrifft die neue Verwendung von ausgewählten Alkoholethoxylaten als Penetrationsförderer für Triazolinone bestehend aus Flucarbazone sodium und Propoxycarbazone-sodium mit herbiziden Eigenschaften.

Es ist allgemein bekannt, dass viele agrochemische Wirkstoffe, insbesondere solche mit systemischer Wirkung, in die Pflanze penetrieren müssen, damit sie ihre Aktivität gleichmäßig in der ganzen Pflanze entfalten können. So muß bei der Wirkstoffaufnahme über die Blätter die Penetrationsbarriere der Cuticula von den Wirkstoffen überwunden werden. Außerdem ist es wichtig, dass die agrochemischen Wirkstoffe schnell und über eine möglichst große Oberfläche verteilt in die Pflanze eindringen, da sonst die Gefahr besteht, dass die aktiven Komponenten durch Regen abgewaschen werden.

Weiterhin ist allgemein bekannt, dass manche in Pflanzenschutzmitteln verwendeten Additive, wie zum Beispiel Tenside, Mineralöle und Pflanzenöle, das Eindringen von agrochemischen Wirkstoffen in die Pflanze fördern und dadurch die Aktivität der Wirkstoffe steigern können. Die Additive können im Einzelfall die Benetzbarkeit verstärken, eine bessere Verteilung des Spritzbelages auf der Oberfläche (= Spreitung) der Pflanze herbeiführen, die Verfügbarkeit des Wirkstoffes im eingetrockneten Spritzrückstand durch sogenanntes Anlösen erhöhen oder direkt die Penetration des Wirkstoffes durch die Cuticula fördern. Die Additive werden dabei entweder direkt in die Formulierung eingebaut - was nur zur einem begrenzten Prozentsatz möglich ist -, oder aber im Tankmixverfahren der jeweiligen Spritzbrühe zugefügt.

Ferner ist schon bekannt, dass sich Alkoholethoxylate als Penetrationsförderer für zahlreiche agrochemische Wirkstoffe verwenden lassen (Gaskin, R.E. (1995), Adjuvants for agrochemicals, Proceedings of the 4th Int. Symp., Ch. 3, pp.167-310, New Zealand Forest Research Institute Limited, Rotorua, New Zealand, (ISSN 0111-8129), Stock et al., Destic. Sci., 1992, 34, pp 23-242, WO-A-9631121 und EP-A-0 473 003).

Es wurde nun gefunden, dass Verbindungen der Formel (I) 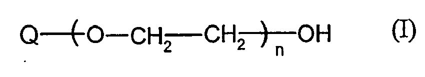 in welcher
- n: für 6, 7 und
- Q: für einen verzweigten Tridecylrest steht,
als Penetrationsförderer für herbizide Wirkstoffe aus der Gruppe bestehend aus Flucarbazone-sodium und Propoxycarbazone-sodium eine überraschend gute Eignung aufweisen. In handelsüblichen Formulierungen können die Verbindungen der Formel (I) bevorzugt in Konzentrationen zwischen 0,1 und 95 Gew.% enthalten sein. Hierbei liegt das Gewichtsverhältnis von herbizidem Wirkstoff aus der Gruppe der Triazolinone zu Alkoholethoxylat der Formel (I) vorzugsweise zwischen 1:0,5 und 1:5.

Insbesondere steht Q in der Formel (I) für Isotridecyl.

Die Erfindung betrifft daher den Einsatz von Alkoholethoxylaten der Formel (I) für den angegebenen Zweck. Außerdem betrifft die Erfindung Pflanzenbehandlungsmittel, die eine Kombination bestehend aus einer Verbindung der Formel (I) und einem Triazolinon enthalten. Bevorzugt sind Pflanzenbehandlungsmittel, die
- zwischen 0,1 und 95 Gew.% an einer Verbindung der Formel (I),
- zwischen 0,1 und 95 Gew.% an Wirkstoff aus der Gruppe bestehend aus Flucarbazone sodium und Propoxycarbazone-sodium und
- zwischen 4,9 und 80 Gew.% an Zusatzstoffen
enthalten.

Es ist als äußerst überraschend zu bezeichnen, dass Alkoholethoxylate der Formel (I) wesentlich besser als Penetrationsförderer für herbizid wirksame Triazolinone geeignet sind als vergleichbare Stoffe, die für den gleichen Zweck eingesetzt werden. Daher können die Aufwandmengen an Triazolinon bei Verwendung der erfindungsgemäßen Pflenzenbehandlungsmittel überraschend stark reduziert werden ohne dass die herbizide Wirkung nachlässt.

Die erfindungsgemäße Verwendung von Alkoholethoxylaten der Formel (I) weist eine Reihe von Vorteilen auf. So handelt es sich bei diesen Alkoholethoxylaten um Produkte, die problemlos zu handhaben und auch in größeren Mengen verfügbar sind. Außerdem sind sie biologisch abbaubar und ermöglichen eine deutliche Effektivitätssteigerung bei der Applikation von Triazolinonen.

Die erfindungsgemäß verwendbaren Alkoholethoxylate sind durch die Formel (I) allgemein definiert. Bei den im Handel erhältlichen Alkoholethoxylaten handelt es sich im Allgemeinen um Gemische von Stoffen dieses Typs mit unterschiedlichen Kettenlängen. Erfindungsgemäß umfasst sind daher alle Alkoholethoxylate, die eine effektiv wirksame Menge an Isotridecylethoxylat vom Ethoxylierungsgrad 6, im beschriebenen Mengenbereich enthalten.

Bevorzugt sind solche Alkoholethoxylate der Formel (I) bei denen n für 6 steht.

Die erfindungsgemäßen Isotridecylethoxylate mit den verschiedenen Ethoxylierungsgraden können selbst hergestellt sein. Beispielhaft seien für kommerziell erhältliche Alkoholethoxylate enthaltend die Verbindungen der Formel (I) die im Handel unter den Bezeichnungen Lutensol^{®} TO6 und Marlipal^{®} 13/60 erhältlichen Alkoholethoxylate mit dem Ethoxylierungsgrad 6 genannt.

Die Alkoholethoxylate der Formel (I) und deren Einsatz als oberflächenaktive Stoffe sind bereits bekannt.

Unter herbizid wirksamen Triazolinonen sind im vorliegenden Zusammenhang am meisten bevorzugt die folgenden Substanzen zu verstehen:

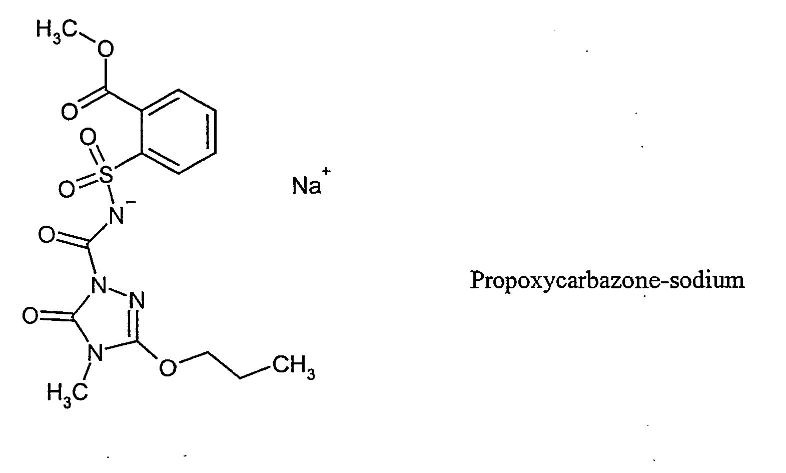

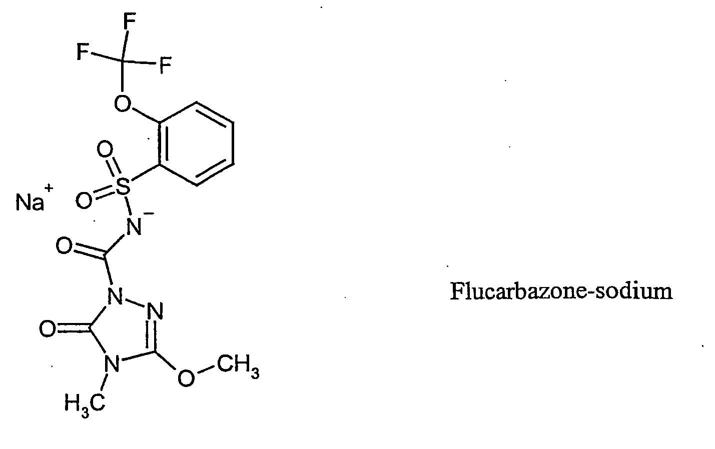

Alle zuvor genannten Stoffe und deren Einsatz als Herbizide sind bekannt (vgl. EP-A-341489, EP-A-422469, EP-A-425948, EP-A-431291, EP-A-507171, EP-A-534266, WO-A-96/11188, WO-A-96/27590, WO-A-96/27591, WO-A-97/03056, US 5,534,177).

Als Zusatzstoffe, die in den erfindungsgemäßen Pflanzenbehandlungsmitteln enthalten sein können, kommen weitere agrochemische Wirkstoffe sowie Kristallisationsinhibitoren, Netzmittel, Emulgatoren und auch Wasser in Frage.

Dabei kommen als agrochemische Wirkstoffe vorzugsweise Substanzen mit, insektiziden, akariziden, nematiziden, fungiziden und insbesondere herbiziden Eigenschaften in Betracht. Aber auch Schutzstoffe gegen Vogelfraß, Pflanzennährstoffe und Bodenstrukturverbesserungsmittel können zugesetzt werden. Ebenso sei der mögliche Zusatz von Verbindungen, die die Kulturpflanzenverträglichkeit verbessern (Safener), als weitere bevorzugte Ausführungsform der erfindungsgemäßen Pflanzenbehandlungsmittel erwähnt.

Als solche agrochemischen Wirkstoffe mit herbiziden Eigenschaften kommen zum Beispiel in Frage: Amidosulfuron, Bentazon, Bromoxynil, Carfentrazone(-ethyl), Cinidon(ethyl), Clodinafop(-propargyl), Clopyralid, Chlorsulfuron, Chlortoluron, Cyclosulfamuron, 2,4-D, Diclofop(-methyl), Difenzoquat, Diflufenican, Florasulam, Flupyrsulfuron(-methyl, -sodium), Pyraflufen(-ethyl), Ethoxyfen, Fenoxaprop-(-ethyl), Fluoroglycofen(-ethyl), Flupropacil, Fluroxypyr, Iodosulfuron, Isoproturon, Mecoprop, Metosulam, Metribuzin, Metsulfuron(-methyl), Pendimethalin, Prosulfocarb, Pyridate, Sulfosulfuron, Thifensulfuron(-methyl), Tralkoxydim, Triasulfuron, Tribenuron(-methyl), Trifluralin.

Als Safener seien Cloquintocet-mexyl, Fenchlorazol-ethyl, Mefenpyr-diethyl, Furilazole und Dymron hervorgehoben.

Als Kristallisationsinhibitoren, die in den erfindungsgemäßen Pflanzenbehandlungsmitteln vorhanden sein können, kommen alle üblicherweise für derartige Zwecke in agrochemischen Mitteln einsetzbaren Stoffe in Frage. Vorzugsweise genannt seien N-Alkyl-pyrrolidone, wie N-Octyl-pyrrolidon und N-Dodecylpyrrolidon, ferner Co-Polymerisate von Polyvinyl-pyrrolidon und Polyvinylalkohol, wie zum Beispiel das unter der Bezeichnung Luviskol VA 64 (Fa. BASF) bekannte Polyvinylpyrrolidon / Polyvinylalkohol-Copolymerisat, weiterhin Alkylcarbonsäure-dimethylamide, wie Decansäure-dimethylamid oder das unter der Bezeichnung Hallcomid^{®} (Fa. Hall Comp.) bekannte C₆₋₁₂-Alkancarbonsäure-dimethylamid-Gemisch, und außerdem Co-Polymerisate von Ethylendiamin mit Ethylenoxid und Propylenoxid, wie zum Beispiel das unter der Bezeichnung Synperonic T 304 (Fa. Uniqema) bekannte Produkt.

Als Netzmittel kommen alle üblichen für derartige Zwecke in Pflanzenbehandlungsmitteln einsetzbaren Stoffe in Betracht. Vorzugsweise genannt seien Alkylphenolethoxylate, Dialkylsulfosuccinate, wie Dioctylsulfosuccinat-Natrium, Laurylethersulfate und Polyoxyethylensorbitan-Fettsäureester.

Als Emulgatoren kommen alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkyl-ammoniumhalogenide, Trialkylaryl-ammoniumhalogenide und Alkylamin-sulfonate. Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C₆-C₂₀-Alkoholen mit Ethylenoxid, Propylenoxid oder Butylenoxid bzw. mit Gemischen von zwei oder drei dieser Alkenoxide im Molverhältnis 1:5 bis 1:50, Umsetzungsprodukte von Fettaminen mit Ethylenoxid im Molverhältnis 1:2 bis 1:25, Umsetzungsprodukte von Fettaminen mit Ethylenoxid/Propylenoxid-Gemischen im Molverhältnis 1:2 bis 1:20, Umsetzungsprodukte von 1 Mol Phenol mit 2 bis 3 Mol Styrol und 10 bis 50 Mol Ethylenoxid, Umsetzungsprodukte von C₈-C₁₂-Alkylphenolen mit Ethylenoxid im Molverhältnis 1:5 bis 1:30, Alkylglykoside, C₈-C₁₆-Alkylbenzol-sulfonsäuresalze, wie z.B. Calcium-, Monoethanolammonium-, Di-ethanolammonium- und Tri-ethanolammonium-Salze.

Als Beispiele für nicht-ionische Emulgatoren seien die unter den Bezeichnungen Pluronic PE 10 100 (Fa. BASF) und Atlox 4913 (Fa. Uniqema) bekannten Produkte genannt. Ferner infrage kommen Tristyryl-phenyl-ethoxylate. Als Beispiele für anionische Emulgatoren seien das unter der Bezeichnung Baykanol SL (= Kondensationsprodukt von sulfoniertem Ditolylether mit Formaldehyd) im Handel befindliche Produkt der Bayer AG genannt sowie phosphatierte oder sulfatierte Tristyryl-phenol-ethoxylate, wobei Soprophor SLK und Soprophor 4D 384 (Fa. Rhodia) speziell genannt seien.

Bei der erfindungsgemäßen Verwendung von Alkoholethoxylaten der Formel (I) kann der Gehalt an diesen Produkten innerhalb eines bestimmten Bereiches variiert werden. Im allgemeinen verwendet man Alkoholethoxylate der Formel (I) in einer solchen Menge, dass sie in den handelsüblichen Formulierungen in Konzentrationen zwischen 0,1 und 30 Gew.%, vorzugsweise zwischen 5 und 15 Gew.% enthalten sind. Das Gewichtsverhältnis von herbizidem Wirkstoff aus der Gruppe der Triazolinone zu Alkoholethoxylat der Formel (I) wird dabei vorzugsweise so gewählt, dass es im allgemeinen zwischen 1:0,2 und 1:20, und besonders bevorzugt zwischen 1:0,5 und 1:5 liegt.

In den erfindungsgemäßen Pflanzenbehandlungsmitteln kann der Gehalt an den einzelnen Komponenten innerhalb eines bestimmten Bereiches variiert werden. Bevorzugt sind diejenigen Pflanzenbehandlungsmittel, in denen der Gehalt
- an einer Verbindung der Formel (I) zwischen 0,5 und 40 Gew.%,
- an Wirkstoff aus der Gruppe bestehend aus Flucarbazone-sodium und Propoxycarbazone-sodium zwischen 2,5 und 70 Gew.%, und
- an Zusatzstoffen zwischen 5 und 50 Gew.%
beträgt.

Handelt es sich bei den erfindungsgemäßen Pflanzenbehandlungsmitteln um anwendungsfertige Produkte, so sind diejenigen bevorzugt, in denen der Gehalt
- an einer Verbindung der Formel (I) zwischen 0,02 und 0,25 Gew.%,
- an Wirkstoff aus der Gruppe bestehend aus Flucarbazone-sodium und Propoxycarbazone-sodium zwischen 0,01 und 2 Gew.%, bevorzugt 0,1 und 2 Gew.% und
- an Zusatzstoffen zwischen 0 und 99 Gew.%
liegt.

Bevorzugt enthalten die anwendungsfertigen Produkte mindestens 0,05 Gew.% und am meisten bevorzugt mindestens 0,1 Gew.% an einer Verbindung der Formel (I).

Bei den anwendungsfertigen Pflanzenbehandlungsmitteln handelt es sich bevorzugt um eine üblicherweise im Pflanzenschutz eingesetzte Spritzbrühe, die im Tankmixverfahren hergestellt wird.

Die Herstellung der erfindungsgemäßen Pflanzenbehandlungsmittel erfolgt in der Weise, dass man die Komponenten in den jeweils gewünschten Verhältnissen miteinander vermischt. Im allgemeinen geht man so vor, dass man einen Wirkstoff aus der Gruppe der Triazolinone vorlegt und dann unter Rühren die übrigen Bestandteile in beliebiger Reihenfolge hinzufügt.

Die Temperaturen können bei der Herstellung der erfindungsgemäßen Pflanzenbehandlungsmittel in einem bestimmten Bereich variiert werden. Man arbeitet im allgemeinen bei Temperaturen zwischen 10°C und 50°C, vorzugsweise bei Raumtemperatur.

Für die Herstellung der erfindungsgemäßen Pflanzenbehandlungsmittel kommen übliche Geräte in Betracht, die zur Zubereitung von agrochemischen Formulierungen eingesetzt werden.

Die erfindungsgemäßen Pflanzenbehandlungsmittel können als solche oder nach vorherigem Verdünnen mit Wasser oder anderen Verdünnungsmitteln ausgebracht werden, also z.B. als gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Pflanzenbehandlungsmittel können sowohl vor als auch nach dem Auflaufen der Pflanzen appliziert werden. Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 1 g und 1 kg Wirkstoff pro Hektar Bodenfläche, vorzugsweise zwischen 5 g und 0,5 kg pro ha.

Mit Hilfe der erfindungsgemäßen Pflanzenbehandlungsmittel lassen sich Triazolinone in besonders vorteilhafter Weise auf die Pflanzen und/oder deren Lebensraum ausbringen. Dabei wird die Kristallisationsneigung fester Wirkstoffe herabgesetzt, das Penetrationsvermögen der Wirkstoffe begünstigt und die biologische Wirksamkeit der aktiven Komponenten im Vergleich zu herkömmlichen Formulierungen gesteigert.

Die Erfindung wird durch die folgenden Beispiele veranschaulicht.

### Herstellungsbeispiel

### Beispiel für ein erfindungsgemäßes Pflanzenbehandlungsmittel

Mittel bestehend aus

| | |
|---|---|
| 18,0 Gew.% | Propoxycarbazone-sodium |
| 30,0 Gew.% | Marlipal® 013/60 oder Lutensol® TO 6 |
| 9,0 Gew. % | Atlas® G 1087 |
| 6,0 Gew.% | SCS 2793 (Castor oil ethoxylate) |
| 3,0 Gew.% | Atlox® LP-6 |
| 0,2 Gew.% | Butylhydroxytoluol |
| 0,5 Gew.% | Aerosil® 200 V |
| 8,0 Gew.% | Rizinusoel IF |
| 25,3 Gew.% | Sonnenblumenöl |

### Verwendungsbeispiel

Bestimmung der Penetration von Triazolinonen in Gerstenpflanzen.

### Wirkstoffzubereitung

Zur Herstellung einer anwendungsfertigen Wirkstoffzubereitung wurde jeweils radioaktiv markierter Wirkstoff (Propoxycarbazone-sodium) mit nichtmarkiertem technischen Wirkstoff und soviel Wasser verdünnt, dass eine Spritzbrühe entstand, die 100 mg Propoxycarbazone-sodium pro Liter enthielt. Die Additive wurden somit im Tankmix in einer Konzentration von 0,1 Gew.% getestet.

### Aufwandmenge

Pro Pflanze wurden jeweils 3 µl an anwendungsfertiger Wirkstoffzubereitung und eine definierte, jeweils identische Menge an radioaktiv markiertem Propoxycarbazone-sodium aufgewandt.

### Pflanzen

Verwendet wurden 14 Tage alte Gerstenpflanzen der Sorte Tapir, die in Vermiculit angezogen worden waren und sich im 2-Blatt-Stadium befanden.

### Auftragsstelle

3 µl an anwendungsfertiger Wirkstoffzubereitung wurden jeweils auf das erste Blatt im Abstand von 5,5 cm zur Blattspitze aufgetragen.

### Versuchsdauer

24 Stunden zwischen dem Zeitpunkt der Applikation und des Abwaschens.

### Wiederholungen

5 Wiederholungen pro Wirkstoffzubereitung.

### Klima

12 Stunden Licht bei 22-23°C und 55-60 % relativer Luftfeuchtigkeit; 10 Stunden Dunkelheit bei 15°C und 80 % relativer Luftfeuchtigkeit sowie zweimal je 1 Stunde Dämmerlicht bei dem zuvor herrschenden Klima.

### Kontrollen

Jeweils 3 µl an anwendungsfertiger Wirkstoffzubereitung wurden direkt in eine Szintillationspflasche pipettiert. Pro Wirkstoffzubereitung wurden 5 Wiederholungen durchgeführt.

### Vorbereitung

Von im Gewächshaus frisch angezogenen Gerstenpflanzen im 2-Blatt-Stadium wurden die zweiten Blätter abgeschnitten. Die verbleibenden Blätter der horizontal plazierten Pflanzen wurden dann mit Hilfe von Objektträgern so fixiert, dass die Auftragsstellen auf den Blättern in einem Bereich von 2 cm nicht verdreht waren. Die anwendungsfertigen Wirkstoffzubereitungen wurden nach ihrer Herstellung 60 Minuten bei Raumtemperatur gerührt.

### Applikation und Aufarbeitung

Jeweils 3 µl Wirkstoffzubereitung wurden mittig auf ein Blatt aufgetragen. Danach wurden die Pflanzen bis zum Eintrocknen der Wirkstoffzubereitung liegen gelassen. Gleichzeitig wurden jeweils 3 µl Wirkstoffzubereitung zur Kontrolle direkt in eine Szintillationsflasche einpipettiert. Von dieser Kontrolle wurden 5 Wiederholungen durchgeführt. Sofort im Anschluß daran wurde mit den übrigen Wirkstoffzubereitungen und Pflanzen ebenso verfahren. Dabei wurde nach der Applikation im Labor eine Temperatur von 21-22°C und eine relative Luftfeuchtigkeit von 70 % aufrecht erhalten.

Nach dem Eintrocknen aller applizierten Wirkstoffzubereitungen wurden die behandelten Pflanzen für 22 Stunden in einen Klimaschrank gestellt. 24 Stunden nach der Applikation der Wirkstoffzubereitungen wurden die Blätter aller Pflanzen wieder mit Objektträgern fixiert. Die Auftragsstelle wurde dann mit 30 µl einer 5 %igen Lösung von Celluloseacetat in Aceton flächendeckend belegt. Nachdem die Lösung vollkommen eingetrocknet war, wurde jeweils der entstandene Celluloseacetat-Film abgenommen und in Szintillationsflaschen gesteckt. Nun wurde der Celluloseacetat-Film mit jeweils 1 ml Aceton versetzt. Die Proben blieben so lange bei Raumtemperatur in geschlossenen Gefäßen stehen, bis die enthaltene Substanz gelöst war. Danach wurden jeweils 2 ml Szintillator hinzugefügt. Die Blattspitzen wurden vorher in einem Stück abgeschnitten und in Papphütchen gesteckt. Die Papphütchen samt Inhalt wurden 16 Stunden bei 50°C getrocknet. Anschließend wurde die Radioaktivität aller Proben nach der Methode der Flüssigkeits- und Verbrennungszintillation gemessen. Aus den erhaltenen Werten wird der prozentuale Anteil der Wirkstoffaufnahme und der Translokation errechnet. Dabei bedeutet 0 %, dass kein Wirkstoff aufgenommen und translociert wurde, während 100 % bedeutet, dass der Wirkstoff vollständig aufgenommen und translociert wurde.

Die Versuchsergebnisse gehen aus der folgenden Tabelle hervor.

**Tabelle I**

| Bestimmung der Penetration von Propoxycarbazone-sodium in Gerstenpflanzen | | |
|---|---|---|
| Tensid | Chemie | Aufnahme (% applizierter Radioaktivität) |
| Marlipal^{®} 13/60 | Isotridecyl-ethoxylat 6EO | 15.70 |
| Lutensol^{®} TO6 | Isotridecyl-ethoxylat 6EO | 19.90 |
| Trend^{®} | Nonylphenolethoxylat | 6.94 |
| Armoblen^{®} | Talgamin-alcoxylat | 2.42 |
| Atplus^{®} MBA 1304 | Monobranched alcohol-alcoxylat | 2.0 |
| Hasten^{®} | Rapsölethylester+NIS | 1.75 |
| Euro Dash^{®} | Mineralöl+Emulgator | 1.55 |
| Agrocer^{®} 04 | Montanwachsemulsion m. Emulgator | 1.15 |
| Eumulgin^{®} ME3518 | Rapsölmethylester+Emulgator | 1.09 |
| Ohne Additiv | (Leitungswasser) | 0.25 |

Die Ergebnisse zeigen, dass die erfindungsgemäße Formulierung wesentlich besser penetriert als die zum Vergleich herangezogenen Formulierungen.

## Patentansprüche

1. Verwendung von Verbindungen der Formel (I) 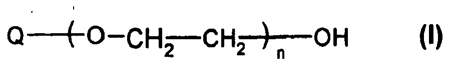 in welcher
n für 6 steht, und
Q für einen verzweigten Tridecylrest steht,
als Penetrationsförderer für herbizide Wirkstoffe aus der Gruppe bestehend aus Flucarbazone-sodium und Propoxycarbazone-sodium.

2. Verwendung nach Anspruch 1, **dadurch gekennzeichnet, dass** die Verbindung der Formel (I) in solchen Mengen in handelsüblichen Formulierungen verwendet wird, dass sie darin in Konzentrationen zwischen 0,1 und 95 Gew.% enthalten ist.

3. Verwendung gemäß Anspruch 1, **dadurch gekennzeichnet, dass** das Gewichtsverhältnis von herbizidem Wirkstoff aus der Gruppe der Triazolinone zu Alkoholethoxylat der Formel (I) zwischen 1:0,5 und 1:5 liegt.

4. Pflanzenbehandlungsmittel enthaltend eine Kombination aus einer Verbindung der Formel (I) gemäß Anspruch 1 und einem herbiziden Wirkstoff aus der Gruppe bestehend aus Flucarbazone-sodium und Propoxycarbazone-sodium

5. Pflanzenbehandlungsmittel gemäß Anspruch 4 **gekennzeichnet durch** einen Gehalt
- zwischen 0,1 und 95 Gew.% an einer Verbindung der Formel (I) gemäß Anspruch 1,
- zwischen 0,1 und 95 Gew.% an Wirkstoff aus der Gruppe bestehend aus Flucarbazone-sodium und Propoxycarbazone-sodium, und
- zwischen 4,9 und 80 Gew.% an Zusatzstoffen.

6. Pflanzenbehandlungsmittel gemäß Anspruch 4, **dadurch gekennzeichnet, dass** der Wirkstoff Propoxycarbazone-sodium ist.

7. Pflanzenbehandlungsmittel gemäß Anspruch 4 **gekennzeichnet durch** einen Gehalt
- an einer Verbindung der Formel (I) zwischen 0,5 und 40 Gew.%,
- an Wirkstoff aus der Gruppe bestehend aus Flucarbazone-sodium und Propoxycarbazone-sodium zwischen 2,5 und 70 Gew.%,
- an Zusatzstoffen zwischen 5 und 50 Gew.%.

8. Anwendungsfertiges Pflanzenbehandlungsmittel **gekennzeichnet durch** einen Gehalt
- an einer Verbindung der Formel (I) gemäß Anspruch 1 zwischen 0,02 und 0,25 Gew.%,
- an Wirkstoff aus der Gruppe bestehend aus Flucarbazone-sodium und Propoxycarbazone-sodium zwischen 0,01 und 2 Gew.%, und
- an Zusatzstoffen zwischen 0 und 99 Gew.%.

9. Anwendungsfertiges Pflanzenbehandlungsmittel nach Anspruch 8 in Form einer Spritzbrühe hergestellt im Tankmixverfahren.

10. Verfahren zur Behandlung von Pflanzen, **dadurch gekennzeichnet, dass** man ein Pflanzenbehandlungsmittel gemäß Anspruch 4 oder 8 auf die Pflanzen oder ihren Lebensraum einwirken lässt.

11. Verwendung eines Mittels gemäß Anspruch 4 oder 8 zur Behandlung von Pflanzen.

## Claims

1. Use of compounds of the formula (I) 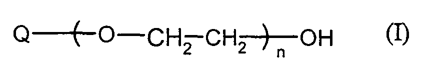 in which
n represents 6 and
Q represents a branched tridecyl radical,
as penetrants for herbicidally active compounds from the group consisting of flucarbazone-sodium and propoxycarbazone-sodium.

2. Use according to Claim 1, **characterized in that** the compound of the formula (I) is employed in such amounts that, in commercial formulations, it is present in concentrations of from 0.1 to 95% by weight.

3. Use according to Claim 1, **characterized in that** the weight ratio of herbicidally active compound from the group of the triazolinones to alcohol ethoxylate of the formula (I) is from 1:0.5 to 1:5.

4. Plant treatment compositions, comprising a combination of a compound of the formula (I) as set forth in Claim 1 and a herbicidally active compound from the group consisting of flucarbazone-sodium and propoxycarbazone-sodium.

5. Plant treatment compositions according to Claim 4, **characterized in that** they comprise
- from 0.1 to 95% by weight of a compound of the formula (I) as set forth in Claim 1,
- from 0.1 to 95% by weight of an active compound from the group consisting of flucarbazone-sodium and propoxycarbazone-sodium, and
- from 4.9 to 80% by weight of additives.

6. Plant treatment compositions according to Claim 4, **characterized in that** the active compound is propoxycarbazone-sodium.

7. Plant treatment compositions according to Claim 4, **characterized in that** the content
- of a compound of the formula (I) is from 0.5 to 40% by weight,
- of active compound from the group consisting of flucarbazone-sodium and propoxycarbazone-sodium is from 2.5 to 70% by weight,
- of additives is from 5 to 50% by weight.

8. Ready-to-use plant treatment compositions, **characterized in that** the content
- of a compound of the formula (I) as set forth in Claim 1 is from 0.02 to 0.25% by weight,
- of active compound from the group consisting of flucarbazone-sodium and propoxycarbazone-sodium is from 0.01 to 2% by weight, and
- of additives is from 0 to 99% by weight.

9. Ready-to-use plant treatment compositions according to Claim 8 in the form of a spray liquor prepared by the tank-mix method.

10. Method for treating plants, **characterized in that** a plant treatment composition according to Claim 4 or 8 is allowed to act on the plants or their habitat.

11. Use of a composition according to Claim 4 or 8 for treating plants.

## Revendications

1. Utilisation de composés de formule (I) 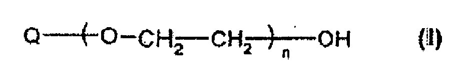 dans laquelle
n vaut 6, et
Q représente un radical tridécyle ramifié,
comme agents favorisant la pénétration pour des agents actifs herbicides choisis dans le groupe consistant en le flucarbazone de sodium et le propoxycarbazone de sodium.

2. Utilisation selon la revendication 1, **caractérisée en ce que** le composé de formule (I) est utilisé dans des formulations usuelles dans des quantité telles qu'il est contenu à une concentration comprise entre 0,1 et 95% en poids.

3. Utilisation selon la revendication 1, **caractérisée en ce que** le rapport en poids de l'agent actif herbicide choisi dans le groupe des triazolinones sur l'éthoxylate d'alcool de formule (I) est compris entre 1:0,5 et 1:5.

4. Agent de traitement de plantes contenant une combinaison d'un composé de formule (I) selon la revendication 1 et d'un agent actif herbicide choisi dans le groupe consistant en le flucarbazone de sodium et le propoxycarbazone de sodium.

5. Agent de traitement de plantes selon la revendication 4, **caractérisé par** une teneur comprise:
- entre 0,1 et 95% en poids d'un composé de formule (I) selon la revendication 1,
- entre 0,1 et 95% en poids d'un agent actif choisi dans le groupe consistant en le flucarbazone de sodium et le propoxycarbazone de sodium, et
- entre 4,9 et 80% en poids d'additifs.

6. Agent de traitement de plantes selon la revendication 4, **caractérisé en ce que** l'agent actif herbicide est le propoxycarbazone de sodium.

7. Agent de traitement de plantes selon la revendication 4, **caractérisé par** une teneur :
- en un composé de formule (I) comprise entre 0,5 et 40% en poids,
- en un agent actif choisi dans le groupe consistant en le flucarbazone de sodium et le propoxycarbazone de sodium entre 2,5 et 70% en poids.
- en additifs comprise entre 5 et 50% en poids.

8. Agent de traitement de plantes prêt à l'emploi **caractérisé par** une teneur :
- en un composé de formule (I) selon la revendication 1, comprise entre 0,02 et 0,25% en poids,
- en agent actif choisi dans le groupe consistant en le flucarbazone de sodium et le propoxycarbazone de sodium entre 0,01 et 2% en poids, et
- en additifs comprise entre 0 et 99% en poids.

9. Agent de traitement de plantes prêt à l'emploi selon la revendication 8 sous forme d'une solution pour pulvérisation produite par un procédé de mélange dans un réservoir.

10. Procédé de traitement de plantes, **caractérisé en ce qu'**on laisse agir un agent de traitement de plantes selon la revendication 4 ou 8 sur les plantes ou leur habitat.

11. Utilisation d'un agent selon la revendication 4 ou 8 pour traiter des plantes.
